# EUROPÄISCHE PATENTSCHRIFT

(11) **EP 3 918 359 B1**
(45) Veröffentlichungstag und Bekanntmachung des Hinweises auf die Patenterteilung: **28.10.2026**
(21) Anmeldenummer: 19848770.4
(22) Anmeldetag: 11.12.2019
(51) Int. Cl.: G01S 5/20, G01S 5/22, G01S 15/88, G01S 15/931

(54) **ULTRASCHALLSYSTEM SOWIE EIN VERFAHREN ZUR LOKALISIERUNG EINES FAHRZEUGFÜHRERS**
ULTRASONIC SYSTEM AND METHOD FOR DETERMINING THE LOCATION OF A DRIVER OF A VEHICLE
SYSTÈME À ULTRASONS ET PROCÉDÉ DE LOCALISATION D'UN CONDUCTEUR DE VÉHICULE

(30) Priorität: 30.01.2019 DE 102019201186
(43) Veröffentlichungstag der Anmeldung: 08.12.2021
(73) Patentinhaber: AUMOVIO Autonomous Mobility Germany GmbH, 85057 Ingolstadt (DE)
(72) Erfinder: BROWN, Christopher, 90411 Nürnberg (DE)
(74) Vertreter: Aumovio Corporation
(86) Internationale Anmeldenummer: PCT/DE2019/200144
(87) Internationale Veröffentlichungsnummer: WO 2020/156605

(56) Entgegenhaltungen:
- EP-A1- 3 385 745
- EP-A2- 2 821 807
- US-A1- 2011 025 494
- US-A1- 2017 361 806

## Beschreibung

Die Erfindung betrifft ein Ultraschallsystem zur Lokalisierung eines Fahrzeugführers sowie ein Verfahren zur Lokalisierung eines Fahrzeugführers.

Heutzutage sind Fahrerassistenzsysteme nicht mehr aus Kraftfahrzeugen wegzudenken. Fahrerassistenzsysteme weisen Funktionen auf, die den Fahrer eines Fahrzeugs sowohl beim Fahren als auch beim Parken unterstützen. Das Parken stellt für die meisten Fahrzeugbenutzer die größte Herausforderung dar. Hat man endlich einen Parkplatz gefunden, dann ist dieser häufig so eng, dass man gerade noch einparken kann - entweder durch Eigenleistung oder durch Unterstützung eines Parkassistenten - ein Aussteigen ohne Verrenkungen aber nicht mehr möglich ist. Genau hier setzen Remote-Park-Assistenten an. Erkennt der Parkassistent eine passende Längs-, Quer- oder eine Schrägparklücke oder auch eine Garageneinfahrt, erhält der Fahrer umgehend eine Rückmeldung. Der Fahrer steigt dann vor der ausgewählten Parklücke aus und startet das Parkmanöver per Fernsteuerung, zum Beispiel über eine Taste an seinem Autoschlüssel oder auf seinem Smartphone. Das Fahrzeug parkt selbständig ein und gegebenenfalls wieder aus, ohne dass eine Person am Steuer sitzt. Wichtig bei einem derartigen Parkvorgang ist es, dass der Fahrer durchweg lokalisiert werden kann. Hierdurch wird sichergestellt, dass das Auto nicht über den Fahrer fährt und auch dass der Fahrer nah genug am Auto ist, um den Vorgang beobachten und seine Sicherheit gewährleisten zu können.

Zur Lokalisierung des Fahrzeugführers ist die Verwendung von Hochfrequenzsignalen, wie beispielsweise Bluetooth oder WiFi, bekannt. Nachteilig hierbei ist, dass die Lokalisierung einer HF-Quelle mittels Signalstärke eine begrenzte Genauigkeit hat und mehrere Empfänger im gesamten Fahrzeug erfordert. Die Verwendung von Richtungsempfängern ist kompliziert und erfordert spezielle Hardware mit zugehöriger Stückliste und Integrationskosten.

Ferner ist es bekannt den Fahrer mittels optischen Vorrichtungen, wie beispielsweise Kameras, zu erfassen. Um den Fahrer zu identifizieren und zu verfolgen, werden hierbei insbesondere Fußgängererkennungstechniken verwendet. Nachteilig hierbei ist, dass diese scheitern, sobald der Fahrer verdeckt ist, beispielsweise durch andere Personen oder irgendwelche sonstigen Hindernisse oder wenn ungünstige Lichtverhältnisse vorliegen, wie beispielsweise eine unzureichende Beleuchtung oder ein sehr niedriger Sonnenstand. Hinzu kommt noch die Schwierigkeit, den Fahrer beim Verlassen des Fahrzeugs zu identifizieren und zu verfolgen.

Die EP 3 385 745 A1 beschreibt ein System und Verfahren zum Bestimmen einer Position eines Benutzergerätes wie eines Smartphones oder eines Autoschlüssels in Bezug auf ein Fahrzeug, wobei das Fahrzeug mehrere akustische, am Fahrzeug voneinander beabstandete Empfänger aufweist, und wobei das Benutzergerät einen als Ultraschallsender ausgebildeten akustischen Sender aufweist. Dabei sendet der Sender ein als Ultraschallsignal ausgebildetes Positionierungssignal, welches auf einem direkten Übertragungsweg von den Empfängern empfangen wird, wobei zeitlich nach dem Empfang des auf direktem Übertragungswegs empfangenen Positionierungssignals ferner ein an einer Bodenfläche reflektiertes Positionierungssignal empfangen wird. Basierend auf den Laufzeiten des jeweiligen von den Empfängern empfangenen Positionierungssignals wird dann eine Position des Benutzergerätes bestimmt. Um möglichst zuverlässig einzuschätzen, dass es sich bei dem einen empfangenen Signal tatsächlich um ein Signal handelt, das in einer Bodenfläche reflektiert wurde, werden zudem Parksensoren des Fahrzeugs verwendet und es wird basierend auf den von den Parksensoren erfassten Informationen die Wahrscheinlichkeit bewertet, dass das empfangene Signal von der Bodenfläche reflektiert wurde.

In der US 2017/1361806 A1 sind ein System und Verfahren zur Bestimmung einer Position eines tragbaren Geräts eines Benutzers in Bezug auf ein Fahrzeug beschrieben. Dabei weist das tragbare Gerät einen ersten akustischen Transceiver auf und das Fahrzeug umfasst eine Mehrzahl an voneinander beabstandet angeordneten zweiten akustischen Transceivern. Der erste akustische Transceiver einerseits und die zweiten akustischen Transceiver andererseits sind jeweils zum Senden und Empfangen von akustischen Signalen ausgebildet. In einer Ausführungsform sendet der erste Transceiver des tragbaren Geräts ein akustisches Signal aus, das von den zweiten akustischen Transceivern empfangen wird. Basierend auf den von den zweiten akustischen Transceivern jeweils empfangen Signalen wird dann die Position des tragbaren Geräts bestimmt.

Die EP 2 821 807 A2 beschreibt ein Verfahren zum Bestimmen einer Position einer einem Fahrzeug zugeordneten Fernbedienungsvorrichtung relativ zu dem Fahrzeug. Das Fahrzeug weist mehrere voneinander beabstandet angeordnete Ultraschallsender auf und die Fernbedienungsvorrichtung umfasst einen Ultraschallempfänger, der dazu ausgebildet ist, die von den Ultraschallsender ausgesendeten Ultraschallsignale zu empfangen. Bei dem Verfahren werden mehrere Ultraschallsignale in einer vorgegebenen zeitlichen Reihenfolge von den Ultraschallsendern des Fahrzeugs ausgesendet, d.h. die Ultraschallsignale werden von den ihnen zugeordneten Sendepositionen in einer vorgegebenen Reihenfolge der Reihe nach ausgesendet, wobei zwischen jedem der Ultraschallsignale eine bestimmte Sendepause eingelegt wird. Die mehreren Ultraschallsignale werden dann einzeln an der Fernbedingungsvorrichtung von dem Ultraschallempfänger empfangen und es wird die Position der Fernbedienungsvorrichtung in Abhängigkeit von den empfangenen Ultraschallsignalen und der vorgegebenen zeitlichen Reihenfolge bestimmt.

Ausgehend hiervon ist es nun Aufgabe der Erfindung, ein System bzw. ein Verfahren bereitzustellen, mit dem eine zuverlässige, robuste und kostengünstige Lokalisierung eines Fahrzeugführers gewährleistet werden können.

Die Aufgabe wird durch ein Ultraschallsystem mit den Merkmalen des unabhängigen Patentanspruchs 1 gelöst. Bevorzugte Ausführungsformen sind Gegenstand der Unteransprüche. Ein Verfahren zur Lokalisierung eines Fahrzeugführers ist Gegenstand des nebengeordneten Patentanspruchs.

Gemäß einem ersten Aspekt bezieht sich die vorliegende Erfindung auf ein Ultraschallsystem zur Lokalisierung eines Fahrzeugführers aufweisend ein Handgerät mit zumindest einem ersten Ultraschallsensor, wobei der erste Ultraschallsensor mindestens einen Sender aufweist, und ein Kraftfahrzeug mit einer Mehrzahl an zweiten Ultraschallsensoren, wobei die zweiten Ultraschallsensoren dazu ausgebildet sind während eines Einparkvorgangs oder eines Ausparkvorgangs eine Umgebung zu erfassen und jeweils mindestens einen Empfänger zum Empfangen von Signalen des ersten Ultraschallsensors aufweisen, wobei die zweiten Ultraschallsensoren jeweils zwei Empfängerkanäle aufweisen, wobei jeweils ein Empfängerkanal der zwei Empfängerkanäle zum Empfangen der Signale des ersten Ultraschallsensors ausgebildet ist und der andere Empfängerkanal zum Empfang von anderen Signalen ausgebildet ist.

Das erfindungsgemäße Ultraschallsystem sorgt insbesondere für eine verbesserte Lokalisierung eines Fahrzeugführers, ohne dass es einer teuren Hardware bedarf. Insbesondere kann eine hohe Genauigkeit und Robustheit erzielt werden.

Im Sinne der Erfindung ist unter Handgerät insbesondere ein mobiles Gerät zu verstehen, das aufgrund seiner Größe und/oder seines Gewichts ohne größere körperliche Anstrengung tragbar und somit mobil einsetzbar ist. Bei dem Handgerät handelt es sich bevorzugt um einen Autoschlüssel, einen Schlüsselanhänger, ein Smartphone und/oder ein Tablet.

In einer bevorzugten Ausgestaltung ist der erste Ultraschallsensor derart ausgebildet, dass er erst bei Aktivierung eines Ein- und/oder eines Ausparkvorgangs Ultraschallsignale sendet. Die Signalsendung erfolgt dann insbesondere während des Ein- und/oder eines Ausparkvorgangs. Mit Ende des Vorgangs endet dann auch bevorzugt die Signalsendung. Ferner ist auch denkbar, dass das Senden von Ultraschallsignalen auf einen manuellen Befehl hin gestartet werden kann. Der Ultraschallsensor kann hierfür eine Aktivierungseinheit aufweisen und/oder mit einer Aktivierungseinheit verbunden sein. Insbesondere durch Betätigen der Aktivierungseinheit durch den Fahrzeugführer kann die Signalsendung starten. Beendet wird die Signalsendung insbesondere dadurch, dass der Fahrzeugführer die Aktivierungseinheit erneut betätigt oder diese loslässt. Es ist auch möglich, dass die Signalsendung beendet wird, wenn die Aktivierungseinheit das Ende eines Parkvorgangs erkannt hat.

In einer bevorzugten Ausgestaltung ist der erste Ultraschallsensor als Transmitter bzw. Sender ausgebildet. Insbesondere ist der erste Ultraschallsensor ausschließlich als Transmitter ausgebildet, er weist also ausschließlich einen Sender und keinen Empfänger auf. Er besitzt daher keinerlei Empfängereigenschaften.

Vorteilhafterweise ist der erste Ultraschallsensor derart ausgebildet, dass er eine Reihe von Ultraschallbursts nach einem einzigartigen und/oder identifizierbaren Code sendet. Im Sinne der Erfindung wird unter Burst insbesondere eine begrenzte Anzahl von Schwingungen fester Frequenz verstanden. Bevorzugt sendet der Ultraschallsensor Ultraschallburst nach einem bekannten Code, insbesondere nach einem bekannten Zeitcode sendet. Ein Signal hat also eine bestimmte, feste Dauer. Es ist aber auch denkbar, dass ein Frequenzcode gesendet wird.

Ein zeitlicher Abstand zwischen den einzelnen Bursts muss nicht festgelegt sein. Der zeitliche Abstand kann aber auch einem festen Muster folgen. Dieses kann zufällig erscheinen, wobei er aber festgelegt ist und/oder den zweiten Ultraschallsensoren bekannt ist und von diesen insbesondere auch als solches erkannt wird. Bevorzugt wird das Ultraschallsignal als ein stochastischer Code gesendet.

In einer bevorzugten Ausgestaltung sind die zweiten Ultraschallsensoren derart ausgebildet, dass sie bei Aktivierung eines Ein- und/oder eines Ausparkvorgangs Signale des ersten Ultraschallsensors empfangen. Insbesondere empfangen sie die Signale ausschließlich während eines Parkvorgangs.

Das Ultraschallsystem weist bevorzugt mindestens drei zweite Ultraschallsensoren auf. Diese sind insbesondere derart am Fahrzeug angeordnet, dass sie die Signale des ersten Ultraschallsensors empfangen können. Von Vorteil ist es, wenn zumindest drei zweite Sensoren derart am Fahrzeug angeordnet sind, dass sie alle ein vom ersten Ultraschallsensor gesendetes Ultraschallsignal empfangen können.

Gemäß einem zweiten Aspekt bezieht sich die Erfindung auf ein Verfahren zur Lokalisierung eines Fahrzeugführers mit den folgenden Schritten:
- Senden von Ultraschallsignalen von zumindest einem ersten Ultraschallsensor, welcher an einem Handgerät angeordnet ist,
- Empfangen der Ultraschallsignale von einer Mehrzahl an einem Fahrzeug angeordneter zweiten Ultraschallsensoren,
- Verarbeiten der empfangenen Ultraschallsignale, wodurch die Position des Handgeräts in Bezug auf das Fahrzeug bestimmt werden kann.

Bevorzugt wird ein Abstand zwischen dem Handgerät und dem Fahrzeug berechnet.

In einer vorteilhaften Ausgestaltung sendet der erste Ultraschallsensor nur Ultraschallsignale, wobei er bevorzugt keine Ultraschallsignale empfangen kann.

Der erste Ultraschallsensor kann eine Reihe von Ultraschallbursts nach einem bekannten Zeitcode sendet. Der Zeitcode kann dabei erst einmal als zufällig erscheinen, wobei er aber festgelegt ist und/oder den zweiten Ultraschallsensoren bekannt ist und von diesen insbesondere auch als solches erkannt wird.

Von Vorteil ist es, wenn die Lokalisierung des Fahrzeugführers während eines Ein- und/oder Ausparkvorgang stattfindet, insbesondere ausschließlich während eines Ein- und/oder Ausparkvorgang.

In einer bevorzugten Ausgestaltung wird ein Ein- und/oder Ausparkvorgang erkannt bzw. aktiviert. Insbesondere wird erst nach dem Erkennen bzw. der Aktivierung des Ein- und/oder Ausparkvorgangs die Ultraschallsignale von dem ersten Ultraschallsensor gesendet und/oder die Ultraschallsignale von den zweiten Ultraschallsensoren empfangen und/oder verarbeitet.

Von Vorteil ist es, wenn der Ein- und/oder Ausparkvorgang abgebrochen wird, sobald festgestellt wird, dass zwischen dem Handgerät und dem Fahrzeug ein bestimmter Abstand überschritten worden ist.

Weitere vorteilhafte Ausgestaltungen ergeben sich aus den Zeichnungen. Hierbei zeigen:
- Fig. 1:: schematische Darstellung eines erfindungsgemäßen Ultraschallsystems in einer Ausgestaltung;
- Fig. 2:: schematisches Ablaufdiagramm eines erfindungsgemäßen Verfahrens in einer Ausgestaltung.

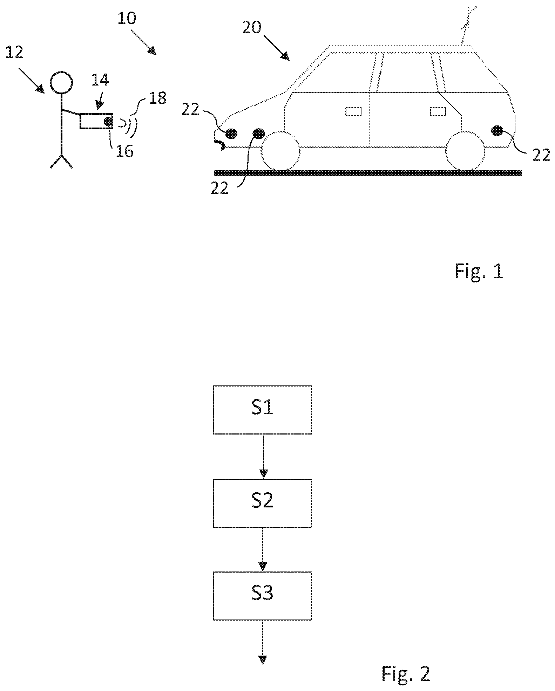

Figur 1 zeigt eine schematische Darstellung eines erfindungsgemäßen Ultraschallsystems 10 zur Lokalisierung eines Fahrzeugführers 12 in einer Ausgestaltung. Das Ultraschallsystem 10 umfasst ein Handgerät 14 mit zumindest einem ersten Ultraschallsensor 16, wobei der erste Ultraschallsensor 16 mindestens einen Sender aufweist. Bei dem Handgerät 14 kann es sich um einen Schlüsselanhänger, ein Smartphone und/oder ein Tablet handeln. Vorteilhaft ist es, wenn der erste Ultraschallsensor 16 ausschließlich als Transmitter/Sender ausgebildet ist und somit nur Ultraschallsignale senden, aber nicht empfangen kann. Der erste Ultraschallsensor 16 ist bevorzugt derart ausgebildet, dass er eine Reihe von Ultraschallbursts nach einem bekannten Zeitcode sendet.

Ferner umfasst das Ultraschallsystem 10 ein Kraftfahrzeug 20 mit einer Mehrzahl an zweiten Ultraschallsensoren 22, wobei die zweiten Ultraschallsensoren 22 jeweils mindestens einen Empfänger zum Empfangen von Signalen des ersten Ultraschallsensors 16 aufweisen. Die zweiten Ultraschallsensoren 22 sind insbesondere derart ausgebildet, dass sie ausschließlich während eines Ein- und/oder eines Ausparkvorgangs Signale 18 des ersten Ultraschallsensors 16 empfangen. Weisen die Sensoren 22 mehrere Empfängerkanäle, erfindungsgemäß zwei Empfängerkanäle, auf, dann kann ein Kanal nach dem Sensor 16 hören und der andere Kanal kann auf andere Signale hören.

Figur 2 zeigt ein schematisches Ablaufdiagramm eines erfindungsgemäßen Verfahrens zur Lokalisierung eines Fahrzeugführers 12 in einer Ausgestaltung. In einem ersten Schritt werden Ultraschallsignalen 18 von zumindest einem ersten Ultraschallsensor 16, welcher an einem Handgerät 14 angeordnet ist, gesendet (S1). In einem zweiten Schritt werden die Ultraschallsignale von einer Mehrzahl an einem Fahrzeug 20 angeordneter zweiten Ultraschallsensoren 22 empfangen (S2). In einem dritten Schritt werden die empfangenen Ultraschallsignale verarbeitet, wodurch die Position des Handgeräts 14 in Bezug auf das Fahrzeug 20 bestimmt wird.

Wenn die vom ersten Ultraschallsensor gesendete Ultraschallsignale von den zweiten Ultraschallsensoren, die sich am Fahrzeug befindet, empfangen werden, können die einzelnen zweiten Ultraschallsensoren grundsätzlich den radialen Abstand zum Handgerät nicht mit der Laufzeit (Time of Flight (ToF)) bestimmen. Die Unterschiede im Time of Flight können jedoch genutzt werden, um den Standort des Handgeräts mittels Multilateration zu schätzen. Mit Hilfe der Ankunftszeitdifferenz (TDOA) von den zweiten Ultraschallsensoren können aber bevorzugt hyperbolische Kurven gezeichnet werden, deren Schnittpunkt dem Standort des Senders, also des ersten Ultraschallsensors, entspricht.

Es ist möglich, eine Implementierung einer Zeitsynchronisation zwischen dem Handgerät bzw. dem ersten Ultraschallsensor und dem Fahrzeug bzw. den zweiten Ultraschallsensoren über einen Funkkanal (RF), z.B. Bluetooth oder WiFi, zu schaffen. Wenn die Zeitsynchronisation zwischen Handgerät bzw. ersten Ultraschallsensor und Fahrzeug bzw. zweiten Ultraschallsensoren möglich ist, dann ist es grundsätzlich ausreichend ToF-Messungen von zwei zweiten Ultraschallsensoren zu haben. Bevorzugt wird dann eine Trilateration zur Lokalisierung des Handgeräts verwendet.

Ferner ist es grundsätzlich auch möglich zweite Ultraschallsensoren zu verwenden, die in der Lage sind, den Einfallswinkel (AoA) von Ultraschallsignalen direkt zu schätzen. Wenn es keine zeitliche Synchronisation zwischen Handgerät und Fahrzeug gibt, ist die AoA von mindestens zwei zweiten Ultraschallsensoren grundsätzlich ausreichend, um das Handgerät mittels Triangulation zu lokalisieren. Wird eine zeitliche Synchronisation durchgeführt wird, dann kann grundsätzlich ein Ultraschallsensor den Radialabstand, beispielsweise durch ToF, und die Lage, beispielsweise durch AoA zum Handgerät schätzen

Von Vorteil ist es, wenn die zweiten Ultraschallsensoren über zwei Empfängerkanäle verfügen. Sie sind bevorzugt so konfiguriert, dass sie direkte und kreuzförmige Echos empfangen. Beim Empfangen von direkten Echos ist der Sender des US-Impulses bevorzugt derselbe wie der Empfänger. Beim Empfangen von kreuzförmigen Echos ist der Sender des Impulses ein Nachbar des Empfängers. Weisen erfindungsgemäß die zweiten Ultraschallsensoren zwei Empfängerkanäle auf, dann können sie während eines Ein- bzw. eines Ausparkvorgangs insbesondere auch noch die Umgebung erfassen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

Auch eine Kombination der verschiedenen Ausführungsbeispiele ist möglich.

### Bezugszeichenliste

- 10: Ultraschallsystem
- 12: Fahrzeugführers
- 14: Handgerät
- 16: erster Ultraschallsensor
- 18: Ultraschallsignal
- 20: Kraftfahrzeug
- 22: zweiter Ultraschallsensor
- S1-S3: Verfahrensschritte

## Patentansprüche

1. Ultraschallsystem (10) zur Lokalisierung eines Fahrzeugführers (12) aufweisend ein Handgerät (14) mit zumindest einem ersten Ultraschallsensor (16), wobei der erste Ultraschallsensor (16) mindestens einen Sender aufweist, und ein Kraftfahrzeug (20) mit einer Mehrzahl an zweiten Ultraschallsensoren (22), wobei die zweiten Ultraschallsensoren (22) dazu ausgebildet sind während eines Einparkvorgangs oder eines Ausparkvorgangs eine Umgebung zu erfassen und jeweils mindestens einen Empfänger zum Empfangen von Signalen (18) des ersten Ultraschallsensors (16) aufweisen, wobei die zweiten Ultraschallsensoren (22) jeweils zwei Empfängerkanäle aufweisen, wobei jeweils ein Empfängerkanal der zwei Empfängerkanäle zum Empfangen der Signale (18) des ersten Ultraschallsensors (16) ausgebildet ist und der andere Empfängerkanal zum Empfang von anderen Signalen ausgebildet ist, um mit den anderen Signalen während eines Einparkvorgangs oder eines Ausparkvorgangs die Umgebung zu erfassen.

2. Ultraschallsystem (10) nach Anspruch 1, **dadurch gekennzeichnet, dass** der erste Ultraschallsensor (16) ausschließlich als Transmitter/Sender ausgebildet ist.

3. Ultraschallsystem (10) nach Anspruch 1 oder 2, **dadurch gekennzeichnet, dass** der erste Ultraschallsensor (16) derart ausgebildet ist, dass er eine Reihe von Ultraschallbursts (18) nach einem bekannten Zeitcode sendet.

4. Ultraschallsensorsystem nach dem vorangehenden Anspruch, **dadurch gekennzeichnet, dass** die zweiten Ultraschallsensoren derart ausgebildet sind, dass sie bei Aktivierung eines Ein- und/oder eines Ausparkvorgangs Signale des ersten Ultraschallsensors empfangen.

5. Ultraschallsystem (10) nach einem der vorangehenden Ansprüche, **dadurch gekennzeichnet, dass** es sich bei dem Handgerät (14) um einen Autoschlüssel, einen Schlüsselanhänger, ein Smartphone und/oder ein Tablet handelt.

6. Ultraschallsystem (10) nach einem der vorangehenden Ansprüche, **dadurch gekennzeichnet, dass** mindestens drei zweite Ultraschallsensoren (22) vorhanden sind und diese Signale des ersten Ultraschallsensors (16) empfangen können.

7. Verfahren zur Lokalisierung eines Fahrzeugführers (12) mit den folgenden Schritten:
- Senden von Ultraschallsignalen (18) von zumindest einem ersten Ultraschallsensor (16), welcher an einem Handgerät (14) angeordnet ist,
- Empfangen der Ultraschallsignale (18) von einer Mehrzahl an einem Fahrzeug (20) angeordneter zweiten Ultraschallsensoren (22), die dazu ausgebildet sind während eines Einparkvorgangs oder eines Ausparkvorgangs eine Umgebung zu erfassen und die jeweils zwei Empfängerkanäle aufweisen, wobei jeweils ein Empfängerkanal der zwei Empfängerkanäle zum Empfangen der Signale (18) des ersten Ultraschallsensors (16) ausgebildet ist und der andere Empfängerkanal zum Empfang von anderen Signalen ausgebildet ist, um mit den anderen Signalen während eines Einparkvorgangs oder eines Ausparkvorgangs die Umgebung zu erfassen,
- Verarbeiten der empfangenen Ultraschallsignale, wodurch die Position des Handgeräts (14) in Bezug auf das Fahrzeug (20) bestimmt werden kann.

8. Verfahren nach Anspruch 7, **dadurch gekennzeichnet, dass** der erste Ultraschallsensor (16) ausschließlich Ultraschallsignale (18) sendet.

9. Verfahren nach einem der Ansprüche 7 oder 8, **dadurch gekennzeichnet, dass** der erste Ultraschallsensor (16) eine Reihe von Ultraschallbursts nach einem bekannten Zeitcode sendet.

10. Verfahren nach einem der Ansprüche 7 bis 9, **dadurch gekennzeichnet, dass** ein Ein- und/oder Ausparkvorgang des Fahrzeugs (20) aktiviert und/oder erkannt wird.

11. Verfahren nach dem vorangehenden Anspruch, **dadurch gekennzeichnet, dass** die Lokalisierung des Fahrzeugführers (12) ausschließlich während des Ein- und/oder Ausparkvorgangs stattfindet.

12. Verfahren nach einem der Ansprüche 10 oder 11, **dadurch gekennzeichnet, dass** erst nach der Aktivierung und/oder der Erkennung des Ein- und/oder Ausparkvorgangs der erste Ultraschallsensor (16) Ultraschallsignale (18) sendet und/oder die Ultraschallsignale (18) von den zweiten Ultraschallsensoren (22) empfangen und/oder verarbeitet werden.

13. Verfahren nach einem der vorangehenden Ansprüche 10 bis 12, **dadurch gekennzeichnet, dass** der Ein- und/oder Ausparkvorgang abgebrochen wird, sobald festgestellt wird, dass zwischen dem Handgerät (14) und dem Fahrzeug (20) ein bestimmter Abstand überschritten worden ist.

## Claims

1. An ultrasonic system (10) for determining the location of a driver of a vehicle (12), comprising a handheld device (14) with at least one first ultrasonic sensor (16), wherein the first ultrasonic sensor (16) has at least one transmitter, and a motor vehicle (20) having a plurality of second ultrasonic sensors (22), wherein the second ultrasonic sensors (22) are configured to detect surroundings during a parking manoeuvre or a pulling-out manoeuvre, and to include in each case at least one receiver for receiving signals (18) of the first ultrasonic sensor (16), wherein the second ultrasonic sensors (22) each have two receiver channels, wherein in each case one receiver channel of the two receiver channels is configured for receiving the signals (18) of the first ultrasonic sensor (16) and the other receiver channel is configured for receiving other signals in order to use the other signals to pick up the surroundings during a parking manoeuvre or a pulling-out manoeuvre.

2. The ultrasonic system (10) according to claim 1, **characterised in that** the first ultrasonic sensor (16) is configured exclusively as a transmitter.

3. The ultrasonic system (10) according to claim 1 or 2, wherein the first ultrasonic sensor (16) is configured such that it transmits a series of ultrasonic bursts (18) according to a known time code.

4. The ultrasonic sensor system according to the preceding claim, **characterised in that** the second ultrasonic sensors are configured such that they receive signals of the first ultrasonic sensor when a parking manoeuvre or a pulling-out manoeuvre is activated.

5. The ultrasonic system (10) according to any one of the preceding claims, **characterised in that** the handheld device (14) is a car key, a key fob, a smartphone and/or a tablet.

6. The ultrasonic system (10) according to any one of the preceding claims, **characterised in that** at least three second ultrasonic sensors (22) are present and they can receive signals of the first ultrasonic sensor (16).

7. A method for determining the location of a driver of a vehicle (12) comprising the following steps:
- transmitting ultrasonic signals (18) from at least one first ultrasonic sensor (16) which is arranged on a handheld device (14),
- receiving the ultrasonic signals (18) from a plurality of second ultrasonic sensors (22) arranged on a vehicle (20), which are configured to detect surroundings during a parking manoeuvre or a pulling-out manoeuvre and which each have two receiver channels, wherein in each case one receiver channel of the two receiver channels is configured to receive the signals (18) of the first ultrasonic sensor (16) and the other receiver channel is configured for receiving other signals in order to use the other signals to pick up the surroundings during a parking manoeuvre or a pulling-out manoeuvre,
- processing the received ultrasonic signals, as a result of which the position of the handheld device (14) in relation to the vehicle (20) can be determined.

8. The method according to claim 7, **characterised in that** the first ultrasonic sensor (16) transmits exclusively ultrasonic signals (18).

9. The method according to any one of claims 7 and 8, **characterised in that** the first ultrasonic sensor (16) transmits a series of ultrasonic bursts according to a known time code.

10. The method according to any one of claims 7 to 9, **characterized in that** a parking manoeuvre or a pulling-out manoeuvre of the vehicle (20) is activated and/or detected.

11. The method according to the preceding claim, **characterised in that** the localisation of the driver of a vehicle (12) takes place exclusively during the parking manoeuvre or the pulling-out manoeuvre.

12. The method according to any one of claims 10 and 11, **characterised in that** only after the activation and/or the detection of the parking manoeuvre or the pulling-out manoeuvre the first ultrasonic sensor (16) transmits ultrasonic signals (18) and/or the ultrasonic signals (18) are received and/or processed by the second ultrasonic sensors (22).

13. The method according to any one of the preceding claims 10 to 12, **characterised in that** the parking manoeuvre or the pull-out manoeuvre is terminated as soon as it is determined that a particular distance has been exceeded between the handheld device (14) and the vehicle (20).

## Revendications

1. Système à ultrasons (10) pour localiser un conducteur de véhicule (12) présentant un appareil portatif (14) doté d'au moins un premier capteur à ultrasons (16), dans lequel le premier capteur à ultrasons (16) présente au moins un émetteur et un véhicule automobile (20) doté d'une pluralité de seconds capteurs à ultrasons (22), dans lequel les seconds capteurs à ultrasons (22) sont conçus pour détecter un environnement lors d'une manœuvre de stationnement ou de sortie de stationnement et présentent chacun au moins un récepteur pour recevoir les signaux (18) du premier capteur à ultrasons (16), dans lequel les seconds capteurs à ultrasons (22) présentent chacun deux canaux de réception, dans lequel un canal de réception respectif parmi les deux canaux de réception est conçu pour recevoir les signaux (18) du premier capteur à ultrasons (16) et l'autre canal de réception est conçu pour recevoir d'autres signaux afin de détecter l'environnement à l'aide des autres signaux lors d'une manœuvre de stationnement ou de sortie de stationnement.

2. Système à ultrasons (10) selon la revendication 1, **caractérisé en ce que** le premier capteur à ultrasons (16) est conçu exclusivement comme un émetteur.

3. Système à ultrasons (10) selon la revendication 1 ou 2, **caractérisé en ce que** le premier capteur à ultrasons (16) est conçu pour envoyer une série de salves ultrasonores (18) selon un code temporel connu.

4. Système de capteur à ultrasons selon la revendication précédente, **caractérisé en ce que** les seconds capteurs à ultrasons sont conçus pour recevoir des signaux du premier capteur à ultrasons lorsqu'une manœuvre de stationnement et/ou une manœuvre de sortie de stationnement est activée.

5. Système à ultrasons (10) selon l'une des revendications précédentes, **caractérisé en ce que** l'appareil portatif (14) est une clé de voiture, un porte-clés, un smartphone et/ou une tablette.

6. Système à ultrasons (10) selon l'une des revendications précédentes, **caractérisé en ce qu'**au moins trois seconds capteurs à ultrasons (22) sont présents et peuvent recevoir des signaux du premier capteur à ultrasons (16).

7. Procédé de localisation d'un conducteur de véhicule (12) comprenant les étapes suivantes :
- l'envoi de signaux ultrasonores (18) à partir d'au moins un premier capteur à ultrasons (16) disposé sur un appareil portatif (14),
- la réception des signaux ultrasonores (18) provenant d'une pluralité de seconds capteurs à ultrasons (22) disposés sur un véhicule (20), conçus pour détecter un environnement lors d'une manœuvre de stationnement ou de sortie de stationnement et présentant chacun deux canaux de réception, dans lequel un canal de réception respectif parmi les deux canaux de réception est conçu pour recevoir les signaux (18) du premier capteur à ultrasons (16) et l'autre canal de réception est conçu pour recevoir d'autres signaux afin de détecter l'environnement à l'aide des autres signaux lors d'une manœuvre de stationnement ou de sortie de stationnement,
- le traitement des signaux ultrasonores reçus, permettant de déterminer la position de l'appareil portatif (14) par rapport au véhicule (20).

8. Procédé selon la revendication 7, **caractérisé en ce que** le premier capteur à ultrasons (16) envoie exclusivement des signaux ultrasonores (18).

9. Procédé selon l'une des revendications 7 ou 8, **caractérisé en ce que** le premier capteur à ultrasons (16) envoie une série de salves ultrasonores selon un code temporel connu.

10. Procédé selon l'une des revendications 7 à 9, **caractérisé en ce qu'**une manœuvre de stationnement et/ou de sortie de stationnement du véhicule (20) est activée et/ou détectée.

11. Procédé selon la revendication précédente, **caractérisé en ce que** la localisation du conducteur de véhicule (12) a lieu exclusivement lors de la manœuvre de stationnement et/ou de sortie de stationnement.

12. Procédé selon l'une des revendications 10 ou 11, **caractérisé en ce que** ce n'est qu'après l'activation et/ou la détection de la manœuvre de stationnement et/ou de sortie de stationnement que le premier capteur à ultrasons (16) envoie des signaux ultrasonores (18) et/ou que les signaux ultrasonores (18) sont reçus et/ou traités par le second capteur à ultrasons (22).

13. Procédé selon l'une des revendications précédentes 10 à 12, **caractérisé en ce que** la manœuvre de stationnement et/ou de sortie de stationnement est interrompue dès qu'il est déterminé qu'une certaine distance a été dépassée entre l'appareil portatif (14) et le véhicule (20).
